# EUROPÄISCHE PATENTSCHRIFT

(11) **EP 0 666 288 B1**
(45) Veröffentlichungstag und Bekanntmachung des Hinweises auf die Patenterteilung: **03.11.1999**
(21) Anmeldenummer: 95100786.3
(22) Anmeldetag: 20.01.1995
(51) Int. Cl.: C09B 48/00, C09B 67/00

(54) **Verfahren zur Herstellung von Chinacridonpigmenten**
Process for the manufacture of quinacridone pigments
Procédé de fabrication de pigments de quinacridone

(30) Priorität: 03.02.1994 DE 4403231
(43) Veröffentlichungstag der Anmeldung: 09.08.1995
(73) Patentinhaber: Clariant GmbH, 65929 Frankfurt am Main (DE)
(72) Erfinder: Urban, Manfred, Dipl.-Ing., D-65205 Wiesbaden (DE)

(56) Entgegenhaltungen:
- EP-A- 0 348 346
- EP-A- 0 489 421
- EP-A- 0 504 923
- EP-A- 0 574 792
- FR-A- 1 262 270
- FR-A- 1 374 077
- FR-A- 2 281 409

## Beschreibung

Gegenstand der vorliegenden Erfindung ist ein besonders umweltfreundliches und wirtschaftliches Verfahren zur Herstellung von Chinacridonpigmenten. Hierzu gehören die linearen, unsubstituierten und substituierten Chinacridonpigmente sowie Mischungen, Mischkristalle und Pigmentzubereitungen auf Basis dieser Pigmente.

Chinacridonpigmente sind seit langem bekannt. Für die Synthese von Chinacridonpigmenten gibt es zwei Synthesewege, die in technischem Maßstab durchgeführt werden. Je nach Syntheseweg fallen die Rohpigmente entweder in feinteiliger oder grobkristalliner Form an. Die feinteilig anfallenden Rohpigmente brauchen vor der Finishbehandlung nicht mehr feinverteilt zu werden, während die grobkristallin anfallenden Rohpigmente vor der Finishbehandlung feinverteilt werden müssen. Solche Feinverteilungs- und Finishverfahren sind z.B. Acidpasting-, Trockenmahl- und Naßmahlverfahren. Auch Kombinationen dieser Verfahren werden beschrieben. Das technisch wichtigste Verfahren ist die Salzvermahlung.

Zur Verbesserung der Reinheit und der Nuance ist es in einigen Fällen erforderlich, die Rohpigmente vor der Feinverteilung zu reinigen, beispielsweise durch Umlösen mit Schwefelsäure. An die Feinverteilung kann sich ein Lösemittelfinish anschließen.

Die Überführung der grobkristallinen Rohpigmente in die Pigmentform ist in der Literatur zahlreich beschrieben:
Die DE-A 1 137 156 beschreibt ein Trockenmahlverfahren zur Herstellung von Chinacridonpigmenten der β- und γ-Phase. Hierbei werden die grobkristallinen Rohpigmente in einer Rollmühle mit großen Mengen Salz und Zusatz von geringen Mengen Lösemittel trocken gemahlen. Es gelangen große Mengen anorganischer Salze ins Abwasser, die heutzutage wieder aufbereitet werden müssen. Aus diesem Grund und wegen der extrem langen Mahlzeiten ist dieses Verfahren heute unwirtschaftlich.

Die US-PS 3 160 510 beschreibt die Herstellung von Chinacridonmischkristallpigmenten durch Trockenmahlung der Rohpigmentmischung mit Salz und anschließende Lösemittelbehandlung des abgetrennten Mahlguts oder durch Schwefelsäureumfällung der Pigmentmischungen und anschließende Lösemittelbehandlung der getrockneten, feinteiligen Rohpigmente. Es fallen große Mengen Salz oder verdünnte Schwefelsäure an, die wieder aufbereitet werden müssen. Aus diesem Grund ist dieses Verfahren unwirtschaftlich geworden.

Auch FR-A-1 374 077 beschreibt die Herstellung von Chinacridonpigmenten durch Schwefelsäureumfällung und anschließende Dispergierung mit Mahlkörpern vom Durchmesser 0,2 bis 1 mm.

In FR-A-1,262,270 (GB-A-900,757) werden Chinacridonpigmente in Gegenwart organischer Lösemittel ohne Salzzugabe in einer Rollmühle gemahlen. Die so hergestellten Pigmente erfüllen jedoch nicht die heutigen Qualitätsanforderungen hinsichtlich Farbstärke und Reinheit.

EP-A-0 504 923 offenbart eine Perlmahlung des Dioxazinpigments C.I. Pigment Violet 23 in Gegenwart eines Pigmentdispergators auf einer Perlmühle mit einer Rührwerksumfangsgeschwindigkeit von > 12 m/s und einer Leistungsdichte von > 2,5 kW pro Liter Mahlraum zum Zwecke der Feinverteilung. Unter ähnlichen Mahlbedingungen wird gemäß der EP-A1-0 574 792 ein Kupferphthalocyanin-Rohpigment der α-Phase unter Phasenumwandlung in die β-Phase feinverteilt.

Die EP-A 0 408 499 beschreibt ein Naßmahlverfahren zur Herstellung von Chinacridonpigmenten durch wäßrige Perlmahlung der Rohpigmente mit Zusatz von mikronisierten Wachsen. Unter den dort angegebenen Bedingungen werden jedoch Pigmente erhalten, die Nachteile in der erreichten Farbstärke aufweisen.

Pigmentdispergatoren zur Herstellung von Pigmentzubereitungen auf Basis von Chinacridonpigmenten sind seit langem bekannt.
Die EP-A 0 321 919 beschreibt die Herstellung von Pigmentzubereitungen auf Basis von Imidazolylmethylengruppen enthaltenden Chinacridonverbindungen.

Die DE-A 3 106 906 (US-PS 4,310,359) beschreibt die Herstellung von Pigmentzubereitungen auf Basis von sulfonamid- und carbonamidgruppenhaltigen Chinacridonverbindungen.

Die DE-A 2 905 114 beschreibt die Herstellung von Pigmentzubereitungen auf Basis von phthalimidomethylengruppenhaltigen Chinacridonverbindungen.

Die EP-A 0069396 beschreibt die Herstellung von Chinacridonpigmentzubereitungen durch Trockenmahlung in Gegenwart von geringen Mengen anorganischer Salze und anschließende Rollmahlung in organischen Lösemitteln. Dieses Verfahren ist sehr aufwendig, weil es ein zweistufiges Mahlverfahren ist. Bei der Lösemittelmahlung fallen große Mengen Lösemittel an, die wieder aufbereitet werden müssen.

Der vorliegenden Erfindung lag die Aufgabe zugrunde, ein umweltfreundliches und kostengünstiges Verfahren zur Herstellung von Chinacridonpigmenten zur Verfügung zu stellen, das die Nachteile des Standes der Technik überwindet.

Überraschenderweise wurde gefunden, daß sich Chinacridonpigmente mit hervorragenden coloristischen und rheologischen Eigenschaften und hoher Transparenz und hoher Farbstärke in einem einzigen Mahlgang und ohne Salzzusatz herstellen lassen, wenn man die bei der Synthese, oder nachträglich mit Schwefelsäure gereinigten, grobkristallin anfallenden Chinacridonrohpigmente in einem flüssigen wäßrigen, wäßrig-organischen oder organischen Medium auf einer Rührwerkskugelmühle mit hoher Energiedichte und kleinen Mahlkörpern bis zum Erreichen eines bestimmten minimalen Feinverteilungsgrades der resultierenden Pigmentteilchen naßvermahlt und die erhaltenen Mahlgutsuspensionen in üblicher Weise aufarbeitet.

Gegenstand der vorliegenden Erfindung ist ein Verfahren zur Herstellung von Pigmenten, Mischkristallpigmenten oder Pigmentzubereitungen auf Basis von linearen, unsubstituierten oder substituierten Chinacridonen, dadurch gekennzeichnet, daß man die in grobkristallinem Zustand vorliegenden Rohpigmente zunächst in einem flüssigen wäßrigen, wäßrig-organischen oder organischen Medium auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner als oder gleich 0,9 mm bis zum gewünschten Feinverteilungsgrad naßvermahlt und anschließend das entstandene Pigment in üblicher Weise isoliert, oder das entstandene Präpigment einer Lösemittelbehandlung bei einer Temperatur von 50 bis 200°C unterwirft und anschließend das Pigment in üblicher Weise isoliert.

Je nach Art und physikalischen Eigenschaften der eingesetzten Chinacridonrohpigmente werden gebrauchsfähige Pigmente entweder bereits unmittelbar nach der erfindungsgemäßen Naßmahlung erhalten, oder es entstehen zunächst feinteilige Präpigmente, die einer Lösemittelbehandlung bei erhöhten Temperaturen unterworfen werden müssen (Lösemittelfinish), um in eine gebrauchsfähige Pigmentform überführt zu werden. Das Präpigment kann in Form der erhaltenen Mahlgutsuspension oder, im Falle einer Zwischenisolierung, nach vorheriger Wiederaufnahme in einer organischen Flüssigkeit dem Lösemittelfinish zugeführt werden. Die organische Flüssigkeit ist zweckmäßigerweise diejenige, in der der Lösemittelfinish durchgeführt wird.

Bei dem erfindungsgemäßen Verfahren werden Feinverteilung und Finish auf elegante Weise kombiniert.

Für die erfindungsgemäße Herstellung dieser Pigmente ist eine hohe Mahlwirkung erforderlich, die durch den Einsatz spezieller Ausführungsformen der Rührwerkskugelmühlen erreicht wird. Für eine Mahlung der gesuchten Effizienz sind z.B. Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise, die mit einer spezifischen Leistungsdichte von über 2,5 kW pro Liter Mahlraum betrieben werden können, wobei deren Rührwerksumfangsgeschwindigkeit über 12 m/s beträgt. Durch die bauliche Ausführung wird sichergestellt, daß die hohe Mahlenergie auf das Mahlgut übertragen wird. Dafür geeignete Mühlen sind z.B. in der DE-A 3 716 587 beschrieben. Ist die Mahlintensität der Mühle zu gering, so werden die guten, erfindungsgemäßen Eigenschaften, insbesondere die hohe Farbstärke und hervorragende Coloristik der Pigmente, nicht erreicht. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muß durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen und die Wärme wird überwiegend über das Mahlgut nach außen abgeführt. Als Mahlkörper dienen Kugeln aus Zirkonoxid, Zirkonmischoxid, Aluminiumoxid oder Quarz vom Durchmesser kleiner als oder gleich 0,9 mm; zweckmäßig werden solche mit einem Durchmesser von 0,2 bis 0,9 mm, vorzugsweise 0,3 bis 0,5 mm, verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so daß die Trennvorrichtungen von den Mahlkörpern praktisch nicht berührt werden, wodurch man Verstopfungen derselben weitgehend verhindern kann. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Für das erfindungsgemäße Verfahren werden die bei der Synthese, beispielsweise die nach der US-PS 2 969 366 erhaltenen Rohpigmente der γ-Phase und β-Phase, die nach der US-PS 2 821 529 erhaltenen Rohpigmente auf Basis substituierter Chinacridone oder die nach der Schwefelsäurereinigung gemäß der US-PS 3 793 327 erhaltenen Rohpigmente eingesetzt.

Von Interesse im Sinne der vorliegenden Erfindung sind grobkristalline Chinacridonrohpigmente, die durch Halogenatome, Alkyl-, Carbonamid- und/oder Alkoxygruppen substituiert sind. Auch grobkristalline Chinacridonmischkristallrohpigmente sind von Interesse.

Von besonderem Interesse sind unsubstituiertes Chinacridon, 3,10-Dichlorchinacridon, 2,9-Dichlorchinacridon, 4,11-Dimethylchinacridon, 4,11-Dichlorchinacridon, 2,9-Dichlorchinacridon, 4,11-Dimethylchinacridon, 2,9-Di-N-methylcarbonamidochinacridon und 2,9-Dimethyl-3,10-dichlorchinacridon.

Je nach dem physikalischen Zustand des Rohpigments können zur Phasenerhaltung geringe Mengen Lösemittel oder oberflächenaktive Mittel zugesetzt werden. Es ist aber auch möglich, die gegebenenfalls bei der Mahlung erfolgte Phasenumwandlung beim anschließenden Finish wieder aufzuheben. Zur Ermittlung der geeigneten Bedingungen sind Vorversuche notwendig. Für den physikalischen Zustand des Rohpigments sind die Reinheit, die Kristallgröße, die Kristallgüte und eventuelle Mischkristallbildung ausschlaggebend. Im allgemeinen müssen reine und hochkristalline Rohpigmente länger gemahlen werden als verunreinigte und im Kristallgitter gestörte Pigmente.

Die erfindungsgemäße Mahlung wird im wäßrigen oder, falls zur Phasenerhaltung erforderlich, im wäßrigen Medium unter Zusatz von geringen Mengen Lösemittel (< Gew.-10%) durchgeführt. Es ist auch möglich, die Mahlung im organischen Medium durchzuführen. Vorzugsweise wird die Mahlung im alkalischen oder neutralen pH-Bereich durchgeführt.

Als flüssiges Mahlmedium werden Wasser, mit Wasser mischbare C₁-C₈-Alkanole, wie Methanol, Ethanol, n-Propanol, Isopropanol, n-Butanol, tert.-Butanol, Isobutanol, Pentanol, Hexanol oder Alkylhexanole; cyclische Alkanole, wie z.B. Cyclohexanol; C₁-C₅-Dialkylketone, wie z.B. Aceton, Diethylketon, Methylisobutylketon oder Methylethylketon; Ether oder Glykolether, wie z.B. Dimethoxyethan, Tetrahydrofuran, Methylglykol, Ethylglykol, Butylglykol, Ethyldiglykol, Methoxypropanol oder Methoxybutanol; aliphatische Carbonsäureamide wie z.B. Formamid oder Dimethylformamid; cyclische Carbonsäureamide, wie z.B. N-Methylpyrrolidon, Valero- und Caprolactam, heterocyclische Basen, wie z.B. Pyridin, Morpholin oder Picolin; sowie Dimethylsulfoxid oder Mischungen dieser Lösungsmittel mit Wasser verwendet. Besonders bevorzugt sind Wasser und Lösungen von C₁-C₈-Alkoholen in Wasser. Für lineare, unsubstituierte Chinacridonpigmente der β-Phase sind aromatische Lösemittel geeignet, beispielsweise aromatische Kohlenwasserstoffe wie Toluol, Xylole oder Ethylbenzol; aromatische Halogenkohlenwasserstoffe, wie z.B. Chlorbenzol, o-Dichlorbenzol, 1,2,4-Trichlorbenzol oder Brombenzol.

Als oberflächenaktive Mittel haben sich anionaktive, kationaktive, nichtionogene, insbesondere anionaktive Mittel bewährt.

In einigen Fällen wirkt sich eine Erhöhung der Temperatur auf 50 bis 80°C förderlich auf den Phasenerhalt aus.

Die Pigmentkonzentration im Mahlgut ist abhängig von der Rheologie der Suspension. Sie sollte kleiner oder gleich 40 Gew.-% sein, im allgemeinen 10 bis 35 Gew.-% % betragen, vorzugsweise zwischen 10 und 20 Gew.-% sein.

Die Mahldauer ist abhängig von den Feinheitsanforderungen für das jeweilige Anwendungsgebiet, beispielsweise das Lack-, Druck- oder Kunststoffgebiet. Deshalb liegt die Verweilzeit des Mahlguts in der Rührwerkskugelmühle je nach geforderter Feinheit im allgemeinen zwischen 5 und 60 Minuten. Sie beläuft sich normalerweise auf eine Dauer von 5 bis 45 Minuten, vorzugsweise 10 bis 30 Minuten.

Die Mahlung wird bei Temperaturen im Bereich von 0 bis 100°C, zweckmäßig bei einer Temperatur zwischen 10 und 60°C, vorzugsweise bei 20 bis 50°C, durchgeführt.

Das Mahlgut kann außer der flüssigen Phase und dem Rohpigment noch Pigmentdispergatoren und/oder kationische, anionische oder nichtionische Tenside und/oder Entschäumer oder andere Zuschlagstoffe enthalten. In diesen Fällen erhält man Pigmentzubereitungen. Die Zugabe des Pigmentdispergators kann vor, während oder nach der Mahlung oder nach dem Lösemittelfinish auf einmal oder in mehreren Portionen vorgenommen werden. Der geeignetste Zeitpunkt muß zuvor durch orientierende Versuche ermittelt werden. Vorzugsweise wird die Zugabe der Pigmentdispergatoren vor dem Lösemittelfinish vorgenommen.

Als Pigmentdispergatoren werden Verbindungen der allgemeinen Formel (I)

P―Xₘ (I)

eingesetzt, in der
- m: eine Zahl von 1 bis 4 ist,
- P: für einen m-wertigen Rest eines linearen, unsubstituierten Chinacridons
oder eines linearen 2,9-Dimethylchinacridons steht, in der
- X: eine Gruppe der Formel (II)

-COOM (II)
oder eine Gruppe der Formel (III)

-SO₃M (III)

darstellt, worin M ein Wasserstoffatom oder ein Äquivalent eines Alkali-, Erdalkali- oder Ammoniumions bedeutet oder
- X: eine Gruppe der Formel (IV) 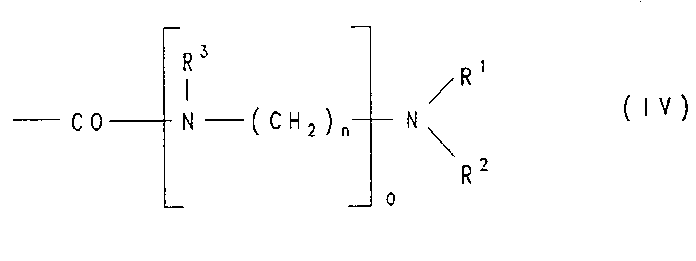
oder eine Gruppe der Formel (V) 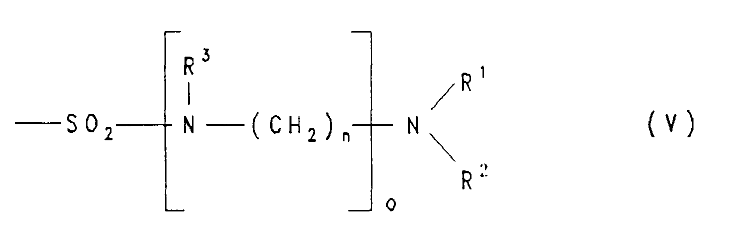 darstellt, worin R¹ und R² unabhängig voneinander jeweils ein Wasserstoffatom, eine C₁-C₂₀-Alkyl-, C₂-C₂₀-Alkenyl- oder eine C₅-C₇-Cycloalkylgruppe sind, oder worin R¹ und R² gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, vorzugsweise Piperidinyl, Morpholinyl oder Pyrrolidinyl, R³ ein Wasserstoffatom oder eine C₁-C₄-Alkylgruppe ist, n eine Zahl von 1 bis 6 und o die Zahl 0 oder 1 ist, oder
- X: die Aminomethylengruppe der Formel (VI) 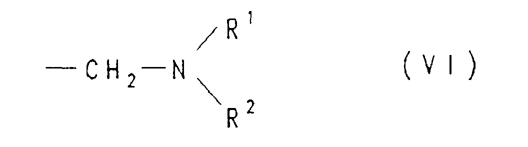
darstellt, oder
- X: eine Gruppe der Formel (VII) 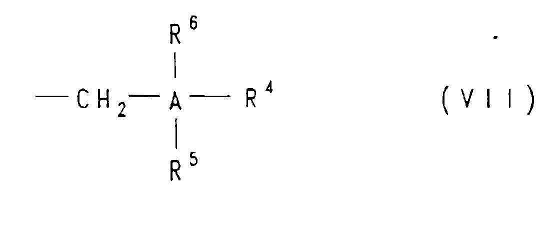
darstellt, worin A einen fünf- oder sechsgliedrigen aromatischen, gegebenenfalls kondensierten Heterocyclus darstellt, welcher aus 1 bis 3 gleichen oder unterschiedlichen Heteroatomen aus der Reihe Stickstoff, Sauerstoff oder Schwefel besteht und der Heterocyclus über ein Kohlenstoffatom an die Methylengruppe gebunden ist, vorzugsweise Imidazolyl, Pyrrolyl, Thiophenyl oder Furanyl;
R⁶ und R⁴ ein Wasserstoffatom, eine C₁-C₄-Alkyl-, eine C₂-C₄-Alkenyl- oder eine Arylgruppe, vorzugsweise Phenylgruppe, bedeutet, wobei R⁶ und R⁴ gemeinsam auch einen aliphatischen oder aromatischen Ring bilden können, vorzugsweise Benzimidazolyl, Thionaphthenyl oder Indolyl, R⁵ ein Wasserstoffatom, eine C₁-C₄-Alkyl-, eine C₁-C₃-Hydroxyalkyl- oder eine C₂-C₄-Alkenylgruppe bedeutet, oder
- X: eine Gruppe der Formel (VIII) 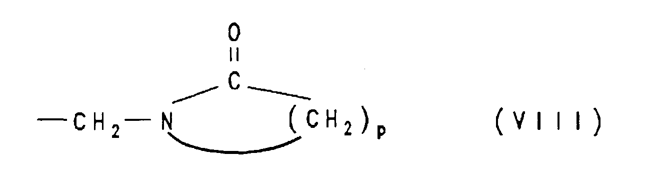
darstellt, wobei p eine Zahl von 3 bis 6 ist, oder
- X: die Phthalimidomethylengruppe (IX) 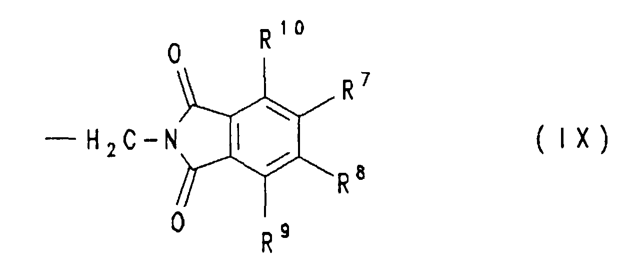
darstellt, wobei R¹⁰, R⁸ und R⁹ ein Wasserstoff-, Fluor-, Chlor- oder Bromatom ist, und R⁷ ein Wasserstoff-, Fluor, Chlor- oder Bromatom ist oder eine Nitro-, C₁-C₅-Alkyl-, C₁-C₆-Alkoxy- oder Benzoylaminogruppe bedeutet, oder
- X: die o-Sulfobenzoesäureimidomethylengruppe (X) 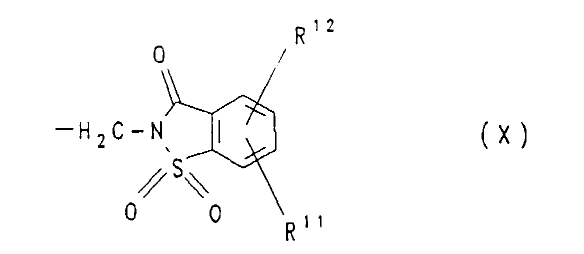
darstellt, wobei R¹¹ und R¹² unabhängig voneinander ein Wasserstoff-, Chlor- oder Bromatom ist, oder eine C₁-C₄-Alkyl-, C₁-C₄-Alkoxy- oder eine Nitrogruppe bedeutet, oder
- X: eine Gruppe der Formel (XI) 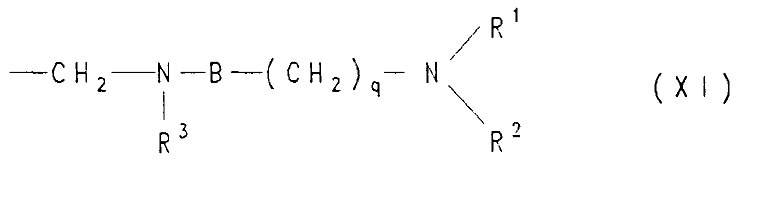
darstellt, in der B eine Carbonyl- oder Sulfonylgruppe ist und
- q: die Zahl 1 oder 2 ist,
oder Pigmentdispergatoren, die in einem Molekül verschiedene der vorstehend angegebenen Substituenten (II) bis ( XI ) enthalten.

Die vorstehend genannten Pigmentdispergatoren werden beispielsweise in DE-A-25 00 509, EP-A-0 489 421 und EP-A-0 604 895 beschrieben.

Bevorzugt sind Pigmentdispergatoren mit der allgemeinen Formel (I), worin P den Rest des linearen, unsubstituierten Chinacridons bedeutet und X die Phthalimidomethylengruppe gemäß Formel (IX), die Imidazolylmethylengruppe gemäß Formel (VII) oder die Sulfonamidgruppe gemäß Formel (V) bedeutet.

Die besagten Pigmentdispergatoren werden je nach Größe der spezifischen Oberfläche des Pigments in Mengen von 0,1 bis 25 Gew.-%, zweckmäßig von 1 bis 15 Gew.-%, vorzugsweise etwa 3 bis 12 Gew.-%, bezogen auf das Rohpigment, zugesetzt. Dies kann verfahrensgemäß schon beim Mahlvorgang oder auch erst im Zuge der anschließenden Finishoperation geschehen. Es lassen sich auch Gemische von Pigmentdispergatoren unterschiedlicher chemischer Struktur der Formel (I) einsetzen. Die Pigmentdispergatoren wirken sich in erster Linie vorteilhaft auf die Flockungsstabilität und Dispergierbarkeit der Pigmente aus. Sie können jedoch auch stabilisierend auf die Kristallphase wirken.

Die nach der Mahlung als feinteilige Pigmente vorliegenden Mahlgutsuspensionen werden direkt isoliert. Die nach der Mahlung als feinteilige Präpigmente vorliegenden Mahlgutsuspensionen werden, gegebenenfalls nach Zugabe der vorstehend genannten Pigmentdispergatoren in wäßriger Suspension oder besonders bevorzugt nach Beimischung von organischen Lösemitteln einer thermischen Behandlung (Lösemittelfinish) unterzogen.

Als Lösemittel für einen solchen Finish kommen beispielsweise in Frage: Alicyclische Kohlenwasserstoffe, wie z.B. Cyclohexan; C₁-C₈-Alkanole und alicyclische Alkohole, wie z.B. Methanol, Ethanol, n- oder Isopropanol, n- oder Isobutanol, tert. Butanol, Pentanole, Hexanole, Cyclohexanol; C₁-C₅-Dialkyl- oder cyclische Ketone, wie z.B. Aceton, Diethylketon, Methylisobutylketon, Methylethylketon oder Cyclohexanon; Ether oder Glykolether, wie z.B. der Monomethyl- oder Monoethylether des Ethylen- oder Propylenglykols, Butylglykol, Ethyldiglykol oder Methoxybutanol; aromatische Kohlenwasserstoffe, wie z.B. Toluol, Xylole oder Ethylbenzol; cyclische Ether, wie z.B. Tetrahydrofuran; aromatische Chlorkohlenwasserstoffe, wie z.B. Chlorbenzol, o-Dichlorbenzol, 1,2,4-Trichlorbenzol oder Brombenzol; substituierte Aromaten, wie z.B. Benzoesäure, Nitrobenzol oder Phenol; aliphatische Carbonsäureamide, wie z.B. Formamid oder Dimethylformamid; cyclische Carbonsäureamide, wie z.B. N-Methylpyrrolidon; Carbonsäure-C₁-C₄-alkylester, wie z.B. Ameisensäurebutylester, Essigsäureethylester oder Propionsäurepropylester; Carbonsäure-C₁-C₄-glykolester, Phthalsäure- und Benzoesäure-C₁-C₄-alkylester, wie z.B. Benzoesäureethylester; heterocyclische Basen wie z.B. Pyridin, Morpholin oder Picolin; sowie Dimethylsulfoxid und Sulfolan.

Bevorzugte organische Lösemittel sind Alkanole, insbesondere Ethanol, Propanole, Butanole und Pentanole; aliphatische Carbonsäureamide, wie Formamid oder Dimethylformamid; cyclische Carbonsäureamide, insbesondere N-Methylpyrrolidon; C₁-C₅-Dialkyl- oder cyclische Ketone, insbesondere Aceton, Diethylketon, Methylisobutylketon, Methylethylketon oder Cyclohexanon.

Die für die Durchführung des Lösemittelfinishs einzuhaltenden Bedingungen sind in hohem Maße von den angestrebten Eigenschaften der Pigmente und Pigmentzubereitungen abhängig und werden jeweils daraufhin ausgerichtet. Normalerweise wird die Suspension der Präpigmentzusammensetzung in dem betreffenden Milieu bei einer Temperatur im Bereich zwischen 50 und 200°C, gegebenenfalls unter erhöhtem Druck, 1 bis 24 Stunden lang behandelt. Im allgemeinen wird dafür die nach der Naßmahlung erhaltene Suspension ohne Zwischenisolierung des Mahlguts eingesetzt. Die zugefügte Lösemittelmenge kann hierbei innerhalb weiter Grenzen schwanken. Bevorzugt verwendet man die 1 bis 5-fache Gewichtsmenge an Lösemittel, bezogen auf das Gewicht des Pigments. Die thermische Behandlung im wäßrig-organischen oder organischen Medium erfolgt vorzugsweise 1 bis 6 Stunden bei 50 bis 1 50°C. Nach beendetem Finish werden die dafür gebrauchten Lösemittel wieder destillativ zurückgewonnen und erneut eingesetzt.

Unter Ausnutzung der auf diese Weise zur Verfügung stehenden Variationsmöglichkeiten lassen sich je nach Verwendungszweck die nach dem erfindungsgemäßen Verfahren anfallenden Präpigmente in eine deckendere oder transparentere Form überführen, was über das Lösevermögen des in Betracht gezogenen Lösemittels, dessen Konzentration, die Auswahl der Temperatur und die Dauer der Finishbehandlung gesteuert werden kann. Wegen des unterschiedlichen chemischen und physikalischen Verhaltens ist das erfindungsgemäße Verfahren nicht direkt auf Pigmente anderer Pigmentklassen übertragbar.

Die Herstellung von Pigmenten auf Basis von Chinacridonen nach dem erfindungsgemäßen Verfahren hat sich als besonders wirtschaftlich sowie umweltfreundlich erwiesen, weil bei der Feinverteilung der Rohpigmente durch Naßmahlung keine Verschmutzung der Luft aufgrund von Staubentwicklung auftritt. Außerdem werden nur geringe Mengen an Chemikalien und Lösemitteln eingesetzt, welche anschließend weiterverarbeitet oder wieder vollständig regeneriert werden können. Somit treten keine Entsorgungsprobleme auf.

Es war überraschend und nicht vorhersehbar, daß durch Naßmahlung in einem einzigen Mahlgang die Feinverteilung der grobkristallinen Chinacridonrohpigmente gelingt, da normalerweise für die Herstellung transparenter und farbstarker Chinacridonpigmente eine Trockenmahlung mit Salzzusatz und anschließende Naßmahlung in der Rollmühle mit Lösemitteln erforderlich sind.

Die nach der vorliegenden Erfindung erhältlichen Pigmente zeichnen sich aus durch ihre hervorragenden coloristischen und rheologischen Eigenschaften, insbesondere durch eine hohe Flockungsstabilität, eine leichte Dispergierbarkeit, ein gutes Glanzverhalten und eine hohe Farbstärke.

Die erfindungsgemäß hergestellten Pigmente lassen sich zum Pigmentieren von hochmolekularen organischen Materialien natürlicher oder synthetischer Herkunft einsetzen.

Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Verschnitt oder in Form von Präparationen oder Dispersionen zu benutzen. Bezogen auf das zu pigmentierende, hochmolekulare organische Material setzt man die erfindungsgemäßen Pigmente in einer Menge von vorzugsweise 0,1 bis 10 Gew.-% ein.

Geeignet sind auch die herkömmlichen Lacksysteme aus der Klasse der Alkydmelaminharzlacke und Zweikomponentenlacke auf Basis von mit Polyisocyanat vernetzbaren Alkyd- und Acrylharzen.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen, nichttrocknenden Alkydharzes aus synthetischen Fettsäuren und Phthalsäureanhydrid und eines butanolveretherten Melaminharzes und Anteilen eines nichttrocknenden Alkydharzes auf Basis von Ricinussäure (kurzölig) ausgewählt.

Zur Beurteilung der Eigenschaften der nach der Erfindung hergestellten Pigmente auf dem Kunststoffsektor wurde aus der Vielzahl der bekannten Kunststoffe Weichpolyvinylchlorid (PVC) ausgewählt.

Zur Beurteilung der Eigenschaften der nach der Erfindung hergestellten Pigmente auf dem Drucksektor wurde aus der Vielzahl der bekannten Drucksysteme ein Tiefdrucksystem auf Nitrocellulosebasis (NC-Druck) ausgewählt.

Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
5 dünnflüssig
4 flüssig
3 dickflüssig
2 leicht gestockt
1 gestockt.

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Bestimmung der Kristallphase der Rohpigmente, Präpigmente, Pigmente, Mischkristallpigmente und Pigmentzubereitungen erfolgte durch Röntgenspektroskopie.

In den nachstehenden Beispielen beziehen sich Teile jeweils auf Gewichtsteile und Prozente jeweils auf Gewichtsprozente der beschriebenen Substanzen.

### Beispiel 1

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem, unsubstituiertem Chinacridonrohpigment (γ-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet.
Man erhält 9,76 Teile Pigment (γ-Phase, mit Spuren α-Phase), das im AM-Lack transparente und farbstarke Lackierungen liefert. Die Viskosität beträgt 3,4 s.

### Beispiel 2

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85 Teilen wäßrigem Ethanol (50 %ig) und 15 Teilen grobkristallinem, unsubstituierten Chinacridonrohpigment (γ-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und das Pigment bei 80°C getrocknet.
Man erhält 14,9 Teile Pigment (γ-Phase, mit Spuren α-Phase), das im AM-Lack farbstarke Lackierungen liefert. Die Rheologie wird mit 5 bewertet. Die Viskosität beträgt 3,6 s.

### Beispiel 3

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen wäßrigem Dimethylformamid (10 %ig) und 10 Teilen grobkristallinem, unsubstituiertem Chinacridonrohpigment (γ-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und bei 80°C getrocknet.
Man erhält 9,90 Teile Pigment (γ-Phase, mit Spuren α-Phase), das im AM-Lack farbstarke Lackierungen liefert. Die Viskosität beträgt 6,8 s.

### Beispiel 4

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem Chinacridonrohpigment (γ-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült, die vereinigten Mahlgutsuspensionen abgesaugt und mit Wasser gewaschen.

Zur Finishoperation wird der Filterkuchen in 50 Teilen Wasser aufgenommen, 20 Teile Dimethylformamid und 2,0 Teile Pigmentdispergator der Formel (I) hinzugefügt. In dieser Formel (I) bedeutet P den Rest des linearen, unsubstituierten Chinacridons und X die Phthalimidomethylengruppe (IX), in der R¹⁰, R⁷, R⁸ und R⁹ jeweils ein Wasserstoffatom und m die Zahl 1,7 ist. Danach werden 20 Teile Dimethylformamid zugesetzt und 3 Stunden bei Siedetemperatur gerührt. Nach dem Abkühlen auf 60 °C wird die Pigmentzubereitung abgesaugt, mit Wasser dimethylformamidfrei gewaschen und bei 80 °C getrocknet.

Man erhält 11,9 Teile Pigmentzubereitung (γ-Phase), die im AM-Lack farbstarke Lackierungen liefert. Die Rheologie wird mit 4 bis 5 bewertet. Die Viskosität beträgt 3,8 s.

### Beispiel 5

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem Chinacridonrohpigment (γ-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült, die vereinigten Mahlgutsuspensionen abgesaugt und mit Wasser gewaschen.

Zur Finishoperation wird der Filterkuchen in 50 Teilen Wasser aufgenommen und nacheinander 0,2 Teile des Natriumsalzes eines Fettsäuretaurids auf Basis einer natürlichen Fettsäure mit 11 bis 13 C-Atomen (Wirkstoffgehalt 50%, Rest Synthesesalz, vorwiegend Natriumsulfat) und 20 Teile Dimethylformamid hinzugefügt. Anschließend wird 3 Stunden bei Siedetemperatur gerührt. Nach dem Abkühlen auf 60°C wird durch Zugabe von 98%iger Ameisensäure ein pH-Wert von 3 bis 4 eingestellt und 1 Stunde bei 60° C gerührt. Danach wird das Pigment abgesaugt, mit Wasser dimethylformamidfrei gewaschen und bei 80 °C getrocknet.
Man erhält 9,9 Teile Pigment (γ-Phase), das im AM-Lack farbstarke Lackierungen liefert. Die Rheologie wird mit 4 bis 5 bewertet. Die Viskosität beträgt 3,4 s.

### Beispiel 6

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem, unsubstituiertem Chinacridonrohpigment (β-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und das Pigment bei 80°C getrocknet.
Man erhält 10,0 Teile Pigment (β-Phase, mit Spuren α-Phase), das im AM-Lack farbstarke Lackierungen liefert. Die Rheologie wird mit 5 bewertet. Die Viskosität beträgt 3,2 s.

### Vergleichsbeispiel 6 a

Wird das oben eingesetzte Rohpigment mit den in der EP-A 0 408 499, Beispiel 10, beschriebenen Mahlbedingungen auf einer Perlmühle mit Scheibenrührwerk, Quarzperlen vom Durchmesser 1 mm und mit der Rührwerksumfangsgeschwindigkeit von 10,2 m/s 30 Minuten lang gemahlen und danach aufgearbeitet, so erhält man ein Pigment (β-Phase, mit Spuren α-Phase), das im AM-Lack 57 % farbschwächer und deutlich trüber ist als das erfindungsgemäß hergestellte Pigment.

### Beispiel 7

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 85,5 Teilen Wasser, 3,6 Teilen Isobutanol (100%ig), 0,9 Teilen Ätznatron und 10 Teilen grobkristallinem, unsubstituiertem Chinacridonrohpigment (β-Phase) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral und isobutanolfrei gewaschen und das Pigment bei 80 °C getrocknet.
Man erhält 9,34 Teile Pigment (β-Phase, mit Spuren α-Phase), das im AM-Lack farbstarke Lackierungen liefert.

### Beispiel 8

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 89 Teilen Wasser, 1 Teil Xylol und 10 Teilen grobkristallinem, unsubstituiertem Chinacridonrohpigment (β-Phase) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült und die Mahlgutsuspensionen vereinigt. Danach wird das Xylol durch Einleiten von Wasserdampf bei 100°C abdestilliert. Nach dem Abkühlen auf 60 °C wird das Pigment abgesaugt, mit Wasser gewaschen und bei 80 °C getrocknet. Man erhält 9,60 Teile Pigment (β-Phase), das im AM-Lack farbstarke Lackierungen liefert.

### Beispiel 9

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem, unsubstituiertem Chinacridonrohpigment (β-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült, die vereinigten Mahlgutsuspensionen abgesaugt und mit Wasser gewaschen.

Zur Finishoperation wird der Filterkuchen in 70 Teilen Wasser aufgenommen, 30 Teile Isobutanol (100%ig) und 1,0 Teile Ätznatron werden hinzugefügt. Es wird auf 150°C erhitzt und 5 Stunden bei 150°C gerührt. Nach dem Abkühlen auf 80°C werden 0,5 Teile Pigmentdispergator der Formel (I) hinzugefügt. In dieser Formel (I) bedeutet P den Rest des linearen , unsubstituierten Chinacridons und X die Sulfonamidgruppe (V), worin R³ ein Wasserstoffatom, R¹ und R² je eine Ethylgruppe, n die Zahl 3, o die Zahl 1 und m die Zahl 2,0 ist.

Danach wird das Isobutanol durch Erhitzen bis auf 100 °C am Übergang azeotrop abdestilliert. Nach dem Abkühlen auf 60 °C wird die Pigmentzubereitung abgesaugt, mit Wasser gewaschen und bei 80 °C getrocknet.
Man erhält 10,0 Teile Pigmentzubereitung (β-Phase), die im AM-Lack hochdeckende Lackierungen liefert. In PVC werden farbstarke und gut dispergierbare Ausfärbungen mit einwandfreier Ausblutechtheit erhalten.

### Beispiel 10

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem 2,9-Dimethylchinacridonrohpigment, eindosiert und mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und das Pigment bei 80°C getrocknet.
Man erhält 9,60 Teile Pigment, das im AM-Lack farbstarke Lackierungen liefert. Die Viskosität beträgt 6,4 s.

### Beispiel 11

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem 2,9-Dimethylchinacridonrohpigment, eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Wasser abgespült, die vereinigten Mahlgutsuspensionen abgesaugt und mit Wasser gewaschen.

Zur Finishoperation wird der Filterkuchen in 80 Teilen Wasser aufgenommen, 30 Teile Isobutanol und 1,2 Teile Pigmentdispergator der Formel (I) werden als 40,6%iger, wasserfeuchter Preßkuchen hinzugefügt. In dieser Formel (I) bedeutet P den Rest des linearen , unsubstituierten Chinacridons und X die Methylenlactamgruppe (VIII), in der p die Zahl 5 und m die Zahl 2,5 ist. Danach wird zum Sieden erhitzt, 3 Stunden bei Siedetemperatur gerührt und das Isobutanol durch Erhitzen bis auf 100 °C am Übergang azeotrop abdestilliert. Nach dem Abkühlen auf 60 °C wird die Pigmentzubereitung abgesaugt, mit Wasser gewaschen und bei 80 °C getrocknet.

Man erhält 10,4 Teile Pigmentzubereitung, die im AM-Lack farbstarke Lackierungen liefert. Die Rheologie wird mit 5 bewertet. Die Viskosität beträgt 3,5 s und die Glanzmessung ergibt den Wert 75.

### Beispiel 12

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Aceton und 10 Teilen grobkristallinem 2,9-Dimethylchinacridonrohpigment, eindosiert und mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Aceton abgespült und die vereinigten Mahlgutsuspensionen 3 Stunden bei Siedetemperatur gerührt. Danach wird die Pigmentsuspension zur Trockene eingedampft.
Man erhält 9,20 Teile Pigment, das im NC-Druck farbstarke und hochglänzende Drucke liefert.

### Beispiel 13

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser, 9 Teilen grobkristallinem 2,9-Dimethylchinacridonrohpigment und 1 Teil Pigmentdispergator der Formel (I), eindosiert. In dieser Formel (I) bedeutet P den Rest des linearen, unsubstituierten Chinacridons und X die Gruppe (VII), worin A der Imidazolylrest ist, R⁶ eine Methylgruppe ist, R⁴ und R⁵ je ein Wasserstoffatom und m die Zahl 1,8 ist. Es wird mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und die Pigmentzubereitung bei 80 °C getrocknet.
Man erhält 9,39 Teile Pigmentzubereitung, die im AM-Lack transparente und farbstarke Lackierungen liefert. Die Rheologie wird mit 5 bewertet. Die Viskosität beträgt 4,4 s.

### Beispiel 14

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Dimethylformamid und 10 Teilen grobkristallinem 2,9-Dichlorchinacridonrohpigment (α-Phase) eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Dimethylformamid abgespült und die vereinigten Mahlgutsuspensionen 3 Stunden bei Siedetemperatur gerührt. Danach wird die Pigmentsuspension zur Trockene eingedampft.
Man erhält 7,9 Teile Pigment (γ-Phase), das im AM-Lack deckende Lackierungen liefert. Die Rheologie wird mit 5 bewertet. Die Viskosität beträgt 2,2 s und die Glanzmessung ergibt den Wert 80.

### Beispiel 15

In eine Rührwerkskugelmühle (Hersteller: Draiswerke GmbH, Mannheim), die mit 336 Teilen Zirkonmischoxidperlen vom Durchmesser 0,3 bis 0,4 mm als Mahlkörper gefüllt ist, wird eine Suspension, bestehend aus 90 Teilen Wasser und 10 Teilen grobkristallinem Mischkristallchinacridonrohpigment, bestehend aus 80% 2,9-Dimethylchinacridon und 20% unsubstituiertem, linearem Chinacridon, eindosiert und mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser gewaschen und das Mischkristallpigment bei 80°C getrocknet.
Man erhält 9,56 Teile Mischkristallpigment, das im AM-Lack transparente und farbstarke Lackierungen liefert.

### Beispiel 16

In eine Rührwerkskugelmühle (Hersteller: Draiswerke GmbH, Mannheim), die mit 530 Teilen Zirkonoxidperlen vom Durchmesser 0,3 bis 0,4 mm als Mahlkörper gefüllt ist, wird eine Suspension, bestehend aus 80 Teilen Dimethylformamid und 16 Teilen grobkristallinem 2,9-Dimethylchinacridonrohpigment und 4 Teilen grobkristallinem unsubstituiertem, linearem Chinacridonrohpigment (α-Phase), eindosiert und mit einer Rührwerksumfangsgeschwindigkeit von 15,6 m/s sowie einer spezifischen Leistungsdichte von 3,1 kW pro Liter Mahlraum 30 Minuten lang bei 25 °C gemahlen. Anschließend wird die Mahlgutsuspension von den Mahlkörpern abgesiebt, die Mahlkörper werden mit Dimethylformamid abgespült und die vereinigten Mahlgutsuspensionen 3 Stunden bei Siedetemperatur gerührt. Danach wird das Mischkristallpigment abgesaugt, mit Wasser dimethylformamidfrei gewaschen und bei 80 °C getrocknet.
Man erhält 17,5 Teile Mischkristallpigment, das im AM-Lack deckende Lackierungen liefert. Die Rheologie wird mit 5 bewertet. Die Viskosität beträgt 2,6 s.

## Patentansprüche

1. Verfahren zur Herstellung von Pigmenten, Mischkristallpigmenten oder Pigmentzubereitungen auf Basis von linearen, unsubstituierten oder substituierten Chinacridonen, dadurch gekennzeichnet, daß man die in grobkristallinem Zustand vorliegenden Rohpigmente zunächst in einem flüssigen wäßrigen, wäßrig-organischen oder organischen Medium auf einer Rührwerkskugelmühle, die mit einer Leistungsdichte von mehr als 2,5 kW pro Liter Mahlraum und einer Rührwerksumfangsgeschwindigkeit von mehr als 12 m/s betrieben wird, unter der Einwirkung von Mahlkörpern vom Durchmesser kleiner als oder gleich 0,9 mm bis zum gewünschten Feinverteilungsgrad naßvermahlt und anschließend das entstandene Pigment in üblicher Weise isoliert, oder das entstandene Präpigment einer Lösemittelbehandlung bei einer Temperatur von 50 bis 200°C unterwirft und anschließend das Pigment in üblicher Weise isoliert.

2. Verfahren gemäß Anspruch 1, dadurch gekennzeichnet, daß man Mahlkörper vom Durchmesser 0,2 bis 0,9 mm, vorzugsweise 0,3 bis 0,5 mm, einsetzt.

3. Verfahren gemäß Anspruch 1 oder 2, dadurch gekennzeichnet, daß die Pigmentkonzentration im Mahlgut gleich oder kleiner als 40 Gew.-% ist, vorzugsweise 10 bis 35 Gew.-%, insbesondere 10 bis 20 Gew.-%, ist.

4. Verfahren gemäß einem oder mehreren der Ansprüche 1 bis 3, dadurch gekennzeichnet, daß die Mahlflüssigkeit Wasser, ein C₁-C₈-Alkanol, Toluol, Xylol, ein C₁-C₅-Dialkylketon, ein aliphatisches Carbonsäureamid oder eine Mischung der genannten Flüssigkeiten ist.

5. Verfahren gemäß einem oder mehreren der Ansprüche 1 bis 4, dadurch gekennzeichnet, daß man grobkristalline Chinacridonrohpigmente der β-Phase oder γ-Phase einsetzt.

6. Verfahren gemäß einem oder mehreren der Ansprüche 1 bis 4, dadurch gekennzeichnet, daß man grobkristalline Chinacridonrohpigmente einsetzt, die durch Halogen-, Alkyl-, Carbonamid- und/oder Alkoxygruppen substituiert sind.

7. Verfahren gemäß Anspruch 6, dadurch gekennzeichnet, daß man unsubstituiertes Chinacridon, 2,9-Dimethyl-, 2,9-Dichlor-, 3,10-Dichlor-, 4,11-Dichlor- oder 4,11-Dimethylchinacridon einsetzt.

8. Verfahren gemäß einem oder mehreren der Ansprüche 1 bis 7, dadurch gekennzeichnet, daß man grobkristalline Chinacridonmischkristallrohpigmente einsetzt.

9. Verfahren gemäß einem oder mehreren der Ansprüche 1 bis 8, dadurch gekennzeichnet, daß man die Naßmahlung bei pH-Werten im alkalischen Bereich durchführt.

10. Verfahren gemäß einem oder mehreren der Ansprüche 1 bis 9, dadurch gekennzeichnet, daß man die Lösemittelbehandlung mit C₁-C₈ -Alkanolen, vorzugsweise mit Isobutanol, in wäßrigem Medium durchführt.

11. Verfahren gemäß einem oder mehreren der Ansprüche 1 bis 10, dadurch gekennzeichnet, daß man zu einem beliebigen Zeitpunkt im Verlauf des Verfahrens einen oder mehrere Pigmentdispergatoren der allgemeinen Formel (I) zusetzt,
P―Xₘ (I)
in welcher
m eine Zahl von 1 bis 4 ist,
P für einen m-wertigen Rest eines linearen, unsubstituierten Chinacridons
oder eines linearen 2,9-Dimethylchinacridons steht, in der
X eine Gruppe der Formel (II)
-COOM (II)
oder eine Gruppe der Formel (III)
-SO₃M (III)
darstellt, worin M ein Wasserstoffatom oder ein Äquivalent eines Alkali-, Erdalkali- oder Ammoniumions bedeutet oder
X eine Gruppe der Formel (IV) 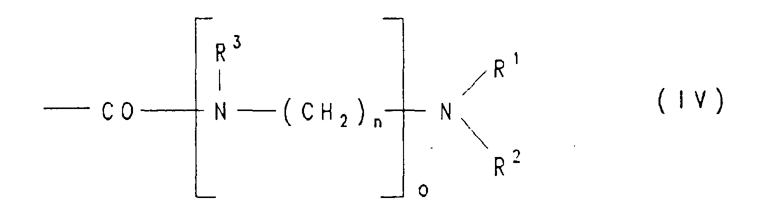
oder eine Gruppe der Formel (V) 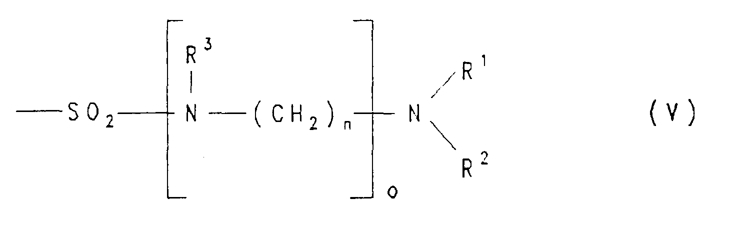 darstellt, worin R¹ und R² unabhängig voneinander jeweils ein Wasserstoffatom, eine C₁-C₂₀-Alkyl-, C₂-C₂₀-Alkenyl- oder eine C₅-C₇-Cycloalkylgruppe sind, oder worin R¹ und R² gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, vorzugsweise Piperidinyl, Morpholinyl oder Pyrrolidinyl, R³ ein Wasserstoffatom oder eine C₁-C₄-Alkylgruppe ist, n eine Zahl von 1 bis 6 und o die Zahl 0 oder 1 ist, oder
X die Aminomethylengruppe der Formel (VI) 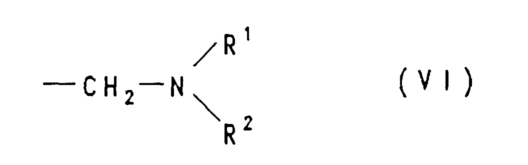
darstellt, oder
X eine Gruppe der Formel (VII) 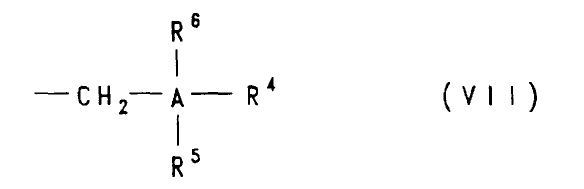
darstellt, worin A einen fünf- oder sechsgliedrigen aromatischen, gegebenenfalls kondensierten Heterocyclus darstellt, welcher aus 1 bis 3 gleichen oder unterschiedlichen Heteroatomen aus der Reihe Stickstoff, Sauerstoff oder Schwefel besteht und der Heterocyclus über ein Kohlenstoffatom an die Methylengruppe gebunden ist, vorzugsweise Imidazolyl, Pyrrolyl, Thiophenyl oder Furanyl;
R⁶ und R⁴ ein Wasserstoffatom, eine C₁-C₄-Alkyl-, eine C₂-C₄-Alkenyl- oder eine Arylgruppe, vorzugsweise Phenylgruppe, bedeutet, wobei R⁶ und R⁴ gemeinsam auch einen aliphatischen oder aromatischen Ring bilden können, vorzugsweise Benzimidazolyl, Thionaphthenyl oder Indolyl, R⁵ ein Wasserstoffatom, eine C₁-C₄-Alkyl-, eine C₁-C₃-Hydroxyalkyl- oder eine C₂-C₄-Alkenylgruppe bedeutet, oder
X eine Gruppe der Formel (VIII) 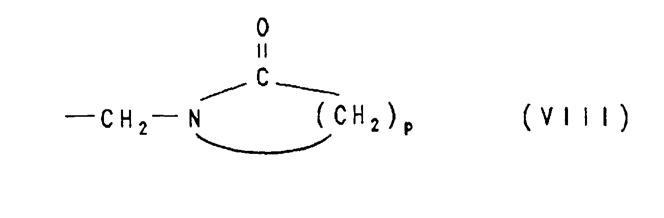
darstellt, wobei p eine Zahl von 3 bis 6 ist, oder
X die Phthalimidomethylengruppe (IX) 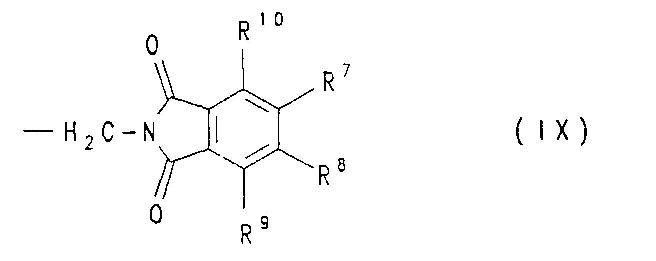
darstellt, wobei R¹⁰, R⁸ und R⁹ ein Wasserstoff-, Fluor-, Chlor- oder Bromatom ist, und R⁷ ein Wasserstoff-, Fluor, Chlor- oder Bromatom ist oder eine Nitro-, C₁-C₅-Alkyl-, C₁-C₆-Alkoxy- oder Benzoylaminogruppe bedeutet, oder
X die o-Sulfobenzoesäureimidomethylengruppe (X) 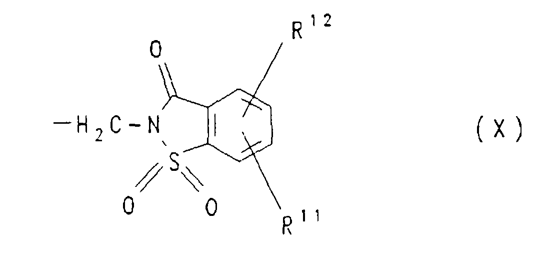
darstellt, wobei R¹¹ und R¹² unabhängig voneinander ein Wasserstoff-, Chlor- oder Bromatom ist, oder eine C₁-C₄-Alkyl-, C₁-C₄-Alkoxy- oder eine Nitrogruppe bedeutet, oder
X eine Gruppe der Formel (XI) 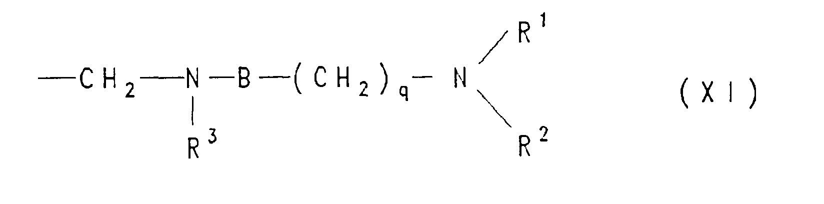
darstellt, in der B eine Carbonyl- oder Sulfonylgruppe ist und
q die Zahl 1 oder 2 ist,
oder Pigmentdispergatoren, die in einem Molekül verschiedene der vorstehend angegebenen Substituenten (II) bis (XI) enthalten.

12. Verfahren gemäß Anspruch 11, dadurch gekennzeichnet, daß man, bezogen auf das eingesetzte Rohpigment, zwischen 0,1 und 25 Gew.-%, vorzugsweise 3 bis 12 Gew.-%, Pigmentdispergator der Formel (I) einsetzt.

## Claims

1. A process for the preparation of a pigment, mixed-crystal pigment or pigment preparation based on linear, unsubstituted or substituted quinacridones, which comprises initially wet-milling the coarsely crystalline crude pigment in a liquid aqueous, aqueous-organic or organic medium in a stirred ball mill which is operated at a power density of more than 2.5 kW per liter of milling space and a stirrer tip speed of more than 12 m/s under the action of grinding media having a diameter of less than or equal to 0.9 mm, until the desired degree of fine division is reached, and then isolating the resulting pigment in a conventional manner, or subjecting the resulting prepigment to solvent treatment at a temperature of from 50 to 200°C and then isolating the pigment in a conventional manner.

2. The process as claimed in claim 1, wherein grinding media having a diameter of from 0.2 to 0.9 mm, preferably from 0.3 to 0.5 mm, are employed.

3. The process as claimed in claim 1 or 2, wherein the pigment concentration in the millbase is less than or equal to 40 % by weight and is preferably from 10 to 35 % by weight and, in particular, from 10 to 20 % by weight.

4. The process as claimed in one or more of claims 1 to 3, wherein the milling liquid is water, a C₁-C₈-alkanol, toluene, xylene, a C₁-C₅-dialkyl ketone, an aliphatic carboxamide or a mixture of the liquids mentioned.

5. The process as claimed in one or more of claims 1 to 4, wherein a crude, coarsely crystalline quinacridone pigment of the β-phase or γ-phase is employed.

6. The process as claimed in one or more of claims 1 to 4, wherein a crude, coarsely crystalline quinacridone pigment is employed which is substituted by halogen, alkyl, carboxamide and/or alkoxy groups.

7. The process as claimed in claim 6, wherein unsubstituted quinacridone, 2,9-dimethyl-, 2,9-dichloro-, 3,10-dichloro-, 4,11-dichloro- or 4,11-dimethylquinacridone is employed.

8. The process as claimed in one or more of claims 1 to 7, wherein a crude, coarsely crystalline quinacridone mixed-crystal pigment is employed.

9. The process as claimed in one or more of claims 1 to 8, wherein the wet milling is carried out at a pH in the alkaline range.

10. The process as claimed in one or more of claims 1 to 9, wherein the solvent treatment is carried out with C₁-C₈-alkanols, preferably isobutanol, in aqueous medium.

11. The process as claimed in one or more of claims 1 to 10, which comprises adding, at any desired point in time during the course of the process, one or more pigment dispersing agents of the formula (I)
P―Xₘ (I)
in which
m is a number from 1 to 4,
P is an m-valent radical of linear, unsubstituted quinacridone or of linear 2,9-dimethylquinacridone, where
X is a group of the formula (II)
-COOM (II)
or a group of the formula (III)
-SO₃M (III)
in which M is a hydrogen atom or one equivalent of an alkali metal ion, alkaline earth metal ion or ammonium ion, or
X is a group of the formula (IV) 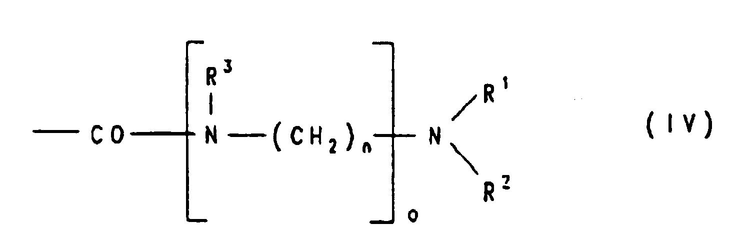
or a group of the formula (V) 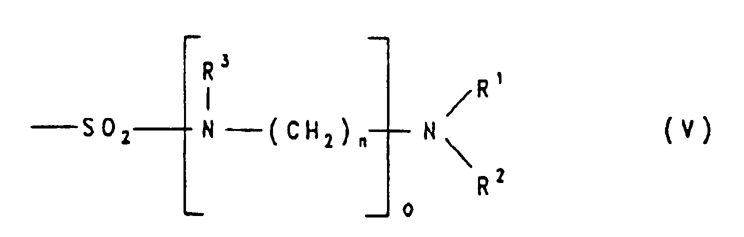 in which R¹ and R² independently of one another are each a hydrogen atom, a C₁-C₂₀-alkyl, C₂-C₂₀-alkenyl or C₅-C₇-cycloalkyl group, or in which R¹ and R² together with the adjacent nitrogen atom form an aliphatic or aromatic five- or six-membered heterocyclic system including in each case from 1 to 3 ring members which are identical or different heteroatoms from the series consisting of nitrogen, oxygen and sulfur, preferably piperidinyl, morpholinyl or pyrrolidinyl,
R³ is a hydrogen atom or a C1-C4-alkyl group, n is a number from 1 to 6 and o is the number 0 or 1, or
X is the aminomethylene group of the formula (VI) 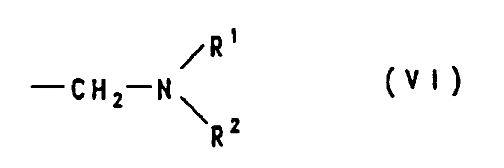
or
X is a group of the formula (VII) 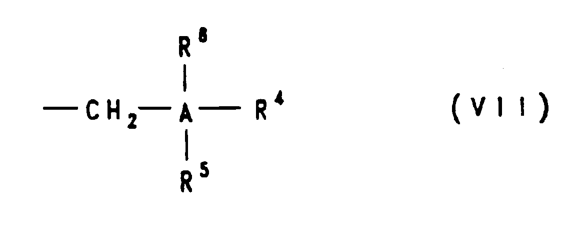
in which A is a five- or six-membered aromatic heterocycle which may be condensed and which comprises from 1 to 3 identical or different heteroatoms from the series consisting of nitrogen, oxygen and sulfur, and the heterocycle is attached to the methylene group via a carbon atom and is preferably imidazolyl, pyrrolyl, thiophenyl or furyl;
R⁶ and R⁴ are a hydrogen atom, a C₁-C₄-alkyl, C₂-C₄-alkenyl or aryl group, preferably a phenyl group, where R⁶ and R⁴ together may also form an aliphatic or aromatic ring, preferably benzimidazolyl, thionaphthenyl or indolyl, R⁵ is a hydrogen atom or a C₁-C₄-alkyl, C₁-C₃-hydroxyalkyl or C₂-C₄-alkenyl group, or
X is a group of the formula (VIII) 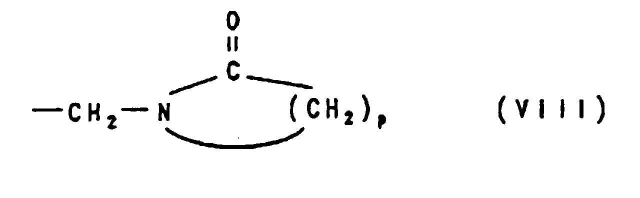
in which p is a number from 3 to 6, or
X is the phthalimidomethylene group (IX) 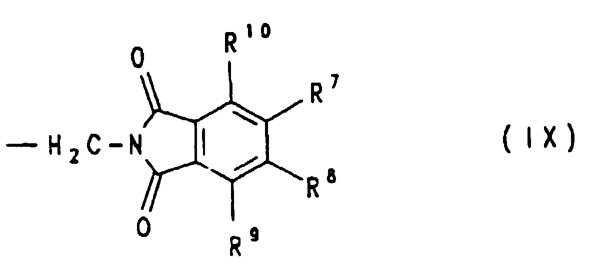
in which R¹⁰, R⁸ and R⁹ are a hydrogen, fluorine, chlorine or bromine atom and R⁷ is a hydrogen, fluorine, chlorine or bromine atom or a nitro, C₁-C₅-alkyl, C₁-C₆-alkoxy or benzoylamino group, or
X is the o-sulfobenzimidomethylene group (X) 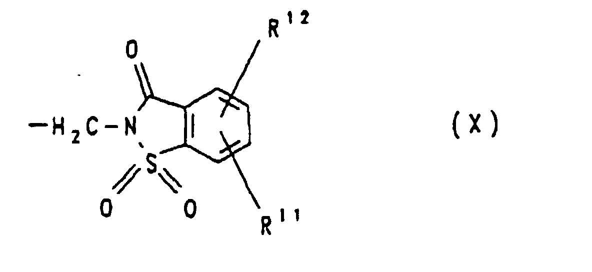
in which R¹¹ and R¹² independently of one another are a hydrogen, chlorine or bromine atom or a C₁-C₄-alkyl, C₁-C₄-alkoxy or nitro group, or
X is a group of the formula (XI) 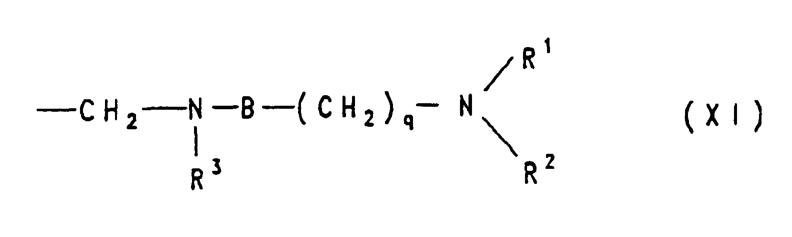
in which B is a carbonyl or sulfonyl group and q is the number 1 or 2,
or pigment dispersing agents which comprise in one molecule various of the abovementioned substituents (II) to (XI).

12. The process as claimed in claim 11, wherein between 0.1 and 25 % by weight, preferably from 3 to 12 % by weight, of pigment dispersing agent of the formula (I) is employed, based on the crude pigment employed.

## Revendications

1. Procédé de préparation de pigments, pigments en solution solide ou préparations de pigments à base de quinacridones linéaires, non substituées ou substituées, caractérisé en ce que l'on soumet d'abord les pigments bruts qui se trouvent à l'état de gros cristaux, à un broyage humide d'abord dans un milieu aqueux, hydroorganique ou organique, sur un broyeur à boules à agitateur qui est actionné à une densité de charge supérieure à 2,5 kW par litre d'espace de broyage et une vitesse périphérique de l'agitateur supérieure à 12 m/s, sous l'effet de corps de broyage ayant un diamètre inférieur à ou égal à 0,9 mm, jusqu'à la finesse de division souhaitée et ensuite on isole le pigment résultant de manière usuelle, ou on soumet le prépigment résultant à un traitement au solvant à une température de 50 à 200°C, et ensuite on isole le pigment de manière usuelle.

2. Procédé selon la revendication 1, caractérisé en ce que l'on utilise des corps de broyage ayant un diamètre de 0,2 à 0,9 mm, de préférence de 0,3 à 0,5 mm.

3. Procédé selon la revendication 1 ou 2, caractérisé en ce que la concentration en pigment dans la matière à broyer est égale ou inférieure à 40 % en poids, de préférence de 10 à 35 % en poids, en particulier de 10 à 20 % en poids.

4. Procédé selon l'une ou plusieurs des revendications 1 à 3, caractérisé en ce que le liquide de broyage est l'eau, un alcanol en C₁-C₈, le toluène, le xylène, une dialkylcétone en C₁-C₅, un carboxamide aliphatique ou un mélange des liquides indiqués.

5. Procédé selon l'une ou plusieurs des revendications 1 à 4, caractérisé en ce que l'on utilise des pigments bruts de quinacridone à gros cristaux de la phase β ou de la phase γ.

6. Procédé selon une ou plusieurs des revendications 1 à 4, caractérisé en ce que l'on utilise des pigments bruts de quinacridone à gros cristaux, qui sont substitués par des groupes halogène, alkyle, carboxamide, et/ou alcoxy.

7. Procédé selon la revendication 6, caractérisé en ce que l'on utilise de la quinacridone non substituée, de la 2,9-diméthyl-, de la 2,9-dichloro-, de la 3,10-dichloro-, de la 4,11-dichloro- ou de la 4,11-diméthylquinacridone.

8. Procédé selon l'une ou plusieurs des revendications 1 à 7, caractérisé en ce que l'on utilise des pigments bruts en solution solide de quinacridone à gros cristaux.

9. Procédé selon l'une ou plusieurs des revendications 1 à 8, caractérisé en ce que l'on effectue le broyage humide à des valeurs de pH dans le domaine alcalin.

10. Procédé selon l'une ou plusieurs des revendications 1 à 9, caractérisé en ce que l'on effectue le traitement au solvant avec des alcanols en C₁-C₈, de préférence avec l'isobutanol, en milieu aqueux.

11. Procédé selon l'une ou plusieurs des revendications 1 à 10, caractérisé en ce que l'on ajoute à un moment quelconque au cours du procédé un ou plusieurs dispersants de pigments de formule générale (I),
P ― Xₘ (I)
dans laquelle
m est un nombre de 1 à 4,
P représente un radical ayant une valence m d'une quinacridone non substituée, linéaire, ou d'une 2,9-diméthylquinacridone linéaire, formule dans laquelle
X représente un groupe de formule (II)
-COOM (II)
ou un groupe de formule (III)
-SO₃M (III)
dans laquelle M représente un atome d'hydrogène ou un équivalent d'un ion alcalin, alcalino-terreux ou ammonium, ou
X représente un groupe de formule (IV) 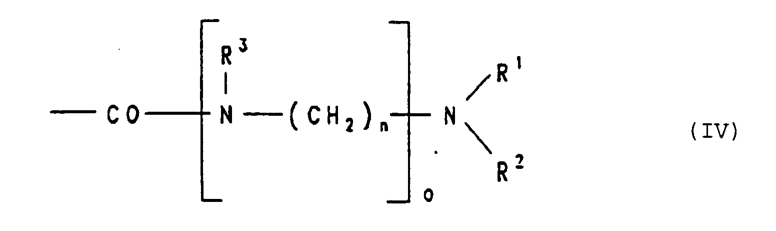
ou un groupe de formule (V) 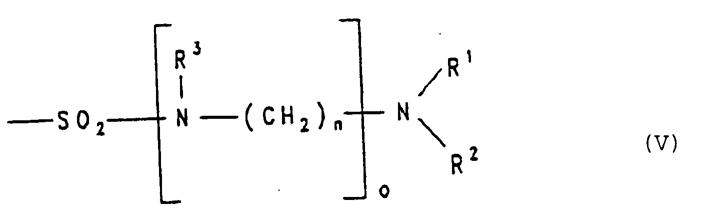 dans laquelle R¹ et R², indépendamment l'un de l'autre, sont chacun un atome d'hydrogène, un groupe alkyle en C₁-C₂₀, alcényle en C₂-C₂₀ ou cycloalkyle en C₅-C₇, ou dans laquelle R¹ et R² forment ensemble, avec l'atome d'azote adjacent, un système hétérocyclique à 5 ou 6 membres, aliphatique ou aromatique, avec à chaque fois 1 à 3 hétéroatomes identiques ou différents, appartenant au cycle, de la série de l'azote, de l'oxygène ou du soufre, de préférence pipéridinyle, morpholinyle ou pyrrolidinyle,
R³ est un atome d'hydrogène ou un groupe alkyle en C₁-C₄, n est un nombre de 1 à 6 et o est le nombre zéro ou 1, ou
X représente le groupe aminométhylène de formule (VI) 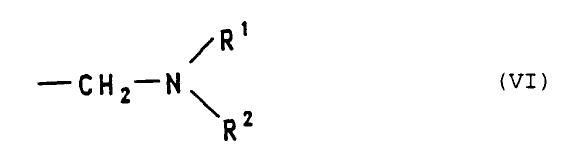
ou
X représente un groupe de formule (VII) 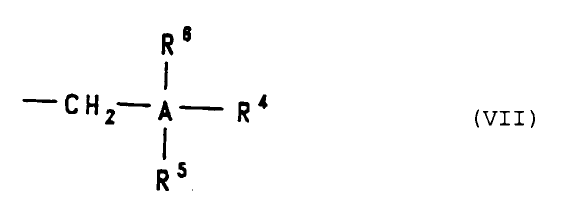
dans laquelle
A représente un hétérocycle éventuellement condensé, aromatique à 5 ou 6 membres, qui est constitué de 1 à 3 hétéroatomes identiques ou différents de la série de l'azote, de l'oxygène ou du soufre et l'hétérocycle est lié au groupe méthylène par l'intermédiaire d'un atome de carbone, de préférence un cycle imidazolyle, pyrrolyle, thiophényle ou furannyle ;
R⁶ et R⁴ représentent un atome d'hydrogène, un groupe alkyle en C₁-C₄, un groupe alcényle en C₂-C₄ ou un groupe aryle, de préférence le groupe phényle, R⁶ et R⁴ pouvant aussi former ensemble un cycle aliphatique ou aromatique, de préférence benzimidazolyle, thionaphtényle ou indolyle,
R⁵ représente un atome d'hydrogène, un groupe alkyle en C₁-C₄, un groupe hydroxyalkyle en C₁-C₃ ou un groupe alcényle en C₂-C₄, ou
X représente un groupe de formule (VIII) 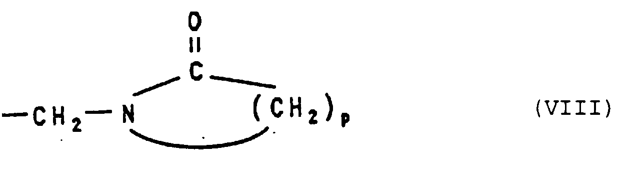
p étant un nombre de 3 à 6, ou
X représente le groupe phtalimidométhylène (IX) 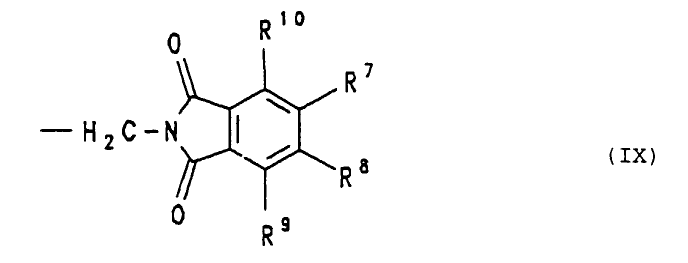
dans lequel
R¹⁰, R⁸ et R⁹ sont un atome d'hydrogène, de fluor, de chlore ou de brome, et R⁷ est un atome d'hydrogène, de fluor, de chlore ou de brome, ou représente un groupe nitro, alkyle en C₁-C₅, alcoxy en C₁-C₆ ou benzoylamino, ou
X représente le groupe o-sulfobenzimidométhylène (X) 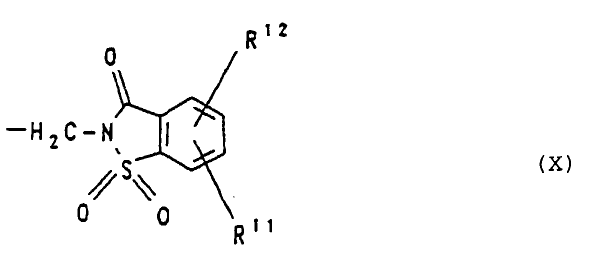
dans laquelle
R¹¹ et R¹² sont, indépendamment l'un de l'autre, un atome d'hydrogène, de chlore ou de brome, ou représentent un groupe alkyle en C₁-C₄, alcoxy en C₁-C₄ ou un groupe nitro, ou
X représente un groupe de formule (XI) 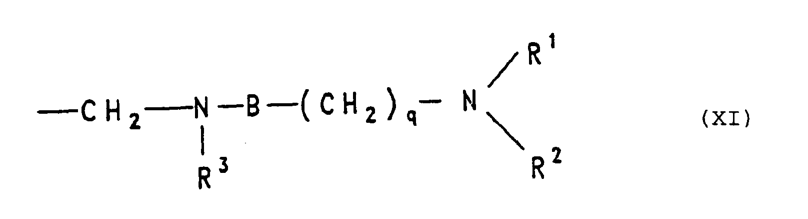
dans laquelle B est un groupe carbonyle ou sulfonyle, et
q est le nombre 1 ou 2,
ou des dispersants de pigments qui contiennent dans une molécule différents substituants (II) à (XI) indiqués plus haut.

12. Procédé selon la revendication 11, caractérisé en ce que l'on utilise, par rapport au pigment brut mis en oeuvre, entre 0,1 et 25 % en poids, de préférence de 3 à 12 % en poids de dispersant de pigment de formule (I).
